# EUROPEAN PATENT SPECIFICATION

(11) **EP 4 049 742 B1**
(45) Date of publication and mention of the grant of the patent: **15.10.2025**
(21) Application number: 20892263.3
(22) Date of filing: 27.11.2020
(51) Int. Cl.: B01D 46/42, F24F 11/89, F24F 1/0073, B01D 46/48, B01D 46/681, F24F 11/30, F24F 13/28

(54) **INDOOR UNIT OF AIR CONDITIONER**
INNENRAUMEINHEIT EINER KLIMAANLAGE
UNITÉ INTÉRIEURE DE CLIMATISEUR

(30) Priority: 29.11.2019 JP 2019216707
(43) Date of publication of application: 31.08.2022
(73) Proprietor: Mitsubishi Heavy Industries Thermal Systems, Ltd., Tokyo, 100-8332 (JP)
(72) Inventor: UNO, Naomichi, Tokyo 100-8332 (JP)
(74) Representative: Cabinet Beau de Loménie
(86) International application number: PCT/JP2020/044211
(87) International publication number: WO 2021/107089

(56) References cited:
- EP-A1- 2 072 927
- WO-A1-2019/030861
- JP-A- 2006 159 049
- JP-A- 2008 070 091
- JP-A- 2010 008 021
- JP-A- 2013 257 143
- JP-A- 2019 016 566
- JP-A- 2019 060 598

## Description

### Technical Field

The present invention relates to an indoor unit of an air conditioner.

### Background Art

There is an indoor unit that includes an automatic cleaning mechanism which automatically cleans a filter as a wall-mounted indoor unit of an air conditioner. Such an automatic cleaning mechanism moves the filter, removes foreign substances such as dust adhered to a surface of the filter, and stores the foreign substances removed from the filter in a dust box. The dust box is detachable, a user removes the dust box from the indoor unit, and attaches the dust box to the indoor unit after disposing of the foreign substances stored in the dust box.

In a case where the dust box is not attached at an appropriate position when attaching the dust box, there is a possibility that the filter is not sufficiently cleaned when the automatic cleaning mechanism cleans the filter after then and a possibility that the filter and the dust box interfere with each other and the filter becomes damaged. Accordingly, an indoor unit provided with a device detecting whether the dust box is appropriately mounted is known (for example, PTL 1).

In PTL 1, in order to detect that brush mechanisms are mounted on a housing portion and the brush mechanisms on both sides including the right and the left are appropriately mounted, limit switches are attached at respective positions on an inside wall of the housing portion on both sides including the right and the left. In the limit switches, in a state where the brush mechanisms are appropriately mounted in the housing portion, a contact outputs a signal by coming into contact with a limit abutment part on a dust box side (that is, detects an appropriate mounting state). On the other hand, there is described an indoor unit that does not come into contact with the limit abutment part on the dust box side and does not output a signal (that is, detects that it is not an appropriate mounting state) in a state where the brush mechanisms are not appropriately mounted in the housing portion.
PTL2 describes a method of detaching dust storage box from body of air cleaning mechanism. PTL3 describes an air conditioner.

### Citation List

### Patent Literature

[PTL 1] Japanese Unexamined Patent Application Publication No. 2008-70091
[PTL 2] Japanese Unexamined Patent Application Publication No. 2019-60598
[PTL 3] Japanese Unexamined Patent Application Publication No. 2010-8021

### Summary of Invention

### Technical Problem

As an automatic cleaning mechanism, there is a mechanism in which a plurality of dust boxes are arranged in a longitudinal direction. In a case where a detection mechanism described in PTL 1 is applied to the automatic cleaning mechanism having the plurality of dust boxes, it is necessary to provide a plurality of limit switches so as to correspond to the dust boxes respectively, complicating layout of wiring connected to the limit switches. Accordingly, there is a possibility that assemblability deteriorates and an occupied space in the indoor unit increases. In addition, in a case where any of the limit switches fails, there is a possibility that the mounting state of a dust box corresponding to the failed limit switch cannot be detected. For this reason, there is a possibility that reliability decreases.

The present invention is devised in view of such circumstances, and an object thereof is to provide an indoor unit of an air conditioner that can improve assemblability by simplifying the structure and can save the space.

In addition, an object thereof is to provide the indoor unit of an air conditioner that can improve reliability.

### Solution to Problem

In order to solve the problem, the indoor unit of an air conditioner of the present invention adopts the following means.

According to an aspect of the present invention, there is provided an indoor unit of an air conditioner as defined in claim 1.

In the configuration, the determination unit determines whether or not any one of the dust boxes is appropriately accommodated in the accommodating portion. Accordingly, it is possible to learn that any dust box is not appropriately accommodated in the accommodating portion. Therefore, a situation in which the air conditioner is operated in a state where the dust box is not appropriately accommodated in the accommodating portion can be prevented. Accordingly, the occurrence of a defect caused by operating the air conditioner in a state where the dust box is not appropriately accommodated in the accommodating portion can be prevented. The defect is, for example, a situation in which the filter and the dust box interfere with each other and the filter becomes damaged when cleaning the filter.

In addition, in the configuration, whether or not the dust boxes adjacent to each other (that is, two dust boxes) are appropriately accommodated in the accommodating portion can be determined by one switch. Accordingly, compared to a case where the switch corresponding to each of the dust boxes adjacent to each other is provided, layout of wiring connected to the switch can be simplified. Accordingly, assemblability can be improved, and the space can be saved. In addition, since the number of components can be reduced, reliability can be improved. In addition, maintainability can be improved, and manufacturing costs can be reduced.

In addition, in the indoor unit of an air conditioner according to the aspect of the present invention, a lever portion that is pressed by the dust boxes adjacent thereto and a shaft portion that engages with the lever portion may be further included. The lever portion may have a slit that extends in the predetermined direction and through which the shaft portion is inserted, a first portion that is provided on a side of a first dust box, which is one dust box adjacent thereto, with the slit as reference and is pressed by the first dust box in the predetermined direction, and a second portion that is provided on a side of a second dust box, which is the other dust box adjacent thereto, with the slit as reference and is pressed by the second dust box in the predetermined direction. The lever portion may be engaged with the shaft portion so as to be rotatable and to be slidable in the predetermined direction. The switch may be pressed by the lever portion moving in the predetermined direction.

In the configuration, for example, in a case where the first dust box is positioned in front of the second dust box in the predetermined direction (that is, a case where the position of the first dust box in the predetermined direction and the position of the second dust box in the predetermined direction do not match each other), only the first dust box presses the lever portion. The first portion of the lever portion, which is pressed by the first dust box, is positioned on the first dust box side from the shaft, out of the lever rotatably provided. For this reason, when only the first dust box presses the lever portion, the lever rotates about the shaft. In addition, similarly, for example, also in a case where the second dust box is positioned in front of the first dust box in the predetermined direction, only the second dust box presses the lever portion, and the lever rotates about the shaft. As described above, in a case where the position of the first dust box in the predetermined direction and the position of the second dust box in the predetermined direction do not match each other and only one dust box presses the lever, the lever does not move in the predetermined direction since the lever rotates.

On the contrary, in a case where the position of the first dust box in the predetermined direction and the position of the second dust box in the predetermined direction match each other, the lever portion is pressed by both of the first dust box and the second dust box. In this case, since the rotation of the lever is restricted by the first dust box and the second dust box, the rotation of the lever is prevented. Therefore, the lever pressed by the first dust box and the second dust box moves in the predetermined direction, and the switch can be pressed.

As described above, in the configuration, the positions of the first dust box and the second dust box, which are adjacent to each other, in the predetermined direction match each other, the pressed state of the switch is maintained. In addition, in a case where the positions in predetermined direction do not match each other, the pressed state of the switch is not maintained. Therefore, whether or not both of the first dust box and the second dust box are appropriately accommodated in the corresponding accommodating portions can be determined by only one switch.

In addition, in the indoor unit of an air conditioner according to the aspect of the present invention, the plurality of dust boxes may be arranged in an intersecting direction that intersects the predetermined direction. The dust box may have a pressing unit that is provided at one end portion in the intersecting direction and indirectly or directly presses the switch and a protrusion portion that protrudes, in the intersecting direction, from the other end portion in the intersecting direction. The accommodating portion may have a recessed portion that is recessed from the other end side wall portion defining the other end in the intersecting direction and into which the protrusion portion is insertable. A length from the one end portion of the dust box to a tip of the protrusion portion in the intersecting direction may be larger than a length from one end portion of the accommodating portion to the other end side wall portion in the intersecting direction.

In the configuration, the length from the one end portion of the dust box to the tip of the protrusion portion is larger than the length from the one end portion of the accommodating portion to the other end side wall portion. Accordingly, in a case of accommodating the dust box in the accommodating portion in a state where the protrusion portion of the dust box is not inserted into the recessed portion, the protrusion portion 13 and the other end side wall portion interfere with each other. For this reason, in a state where the protrusion portion of the dust box is not inserted into the recessed portion, the dust box cannot be accommodated in the accommodating portion. In order to accommodate the dust box in the accommodating portion, first, it is necessary to insert the protrusion portion into the recessed portion. That is, before accommodating the pressing unit indirectly or directly pressing the switch, first, it is necessary to accommodate an opposite side (the other end portion side) where the protrusion portion is provided in the accommodating portion.

In a case where the pressing unit (one end portion) is accommodated in the accommodating portion, there is a possibility that the switch is pressed by the pressing unit 14 even when the other end portion is not accommodated in the accommodating portion. In the configuration, since it is necessary to accommodate from the opposite side (the other end portion side) in the accommodating portion as described above, a state where the other end portion is not accommodated in the accommodating portion can be prevented regardless of the fact that the pressing unit (one end portion) is accommodated in the accommodating portion. Accordingly, a situation in which the air conditioner is operated in a state where the dust box is not appropriately accommodated in the accommodating portion can be more reliably prevented.

In addition, in the indoor unit of an air conditioner according to the aspect of the present invention, a notification unit that issues a notification in a case where the determination unit determines that any one of the dust boxes is not appropriately accommodated in the accommodating portion may be further included.

In the configuration, in a case where the determination unit determines that any one of the dust boxes is not appropriately accommodated in the accommodating portion, the notification unit issues a notification. Accordingly, a user can learn that the dust box is not appropriately accommodated in the accommodating portion. Therefore, since the user can recognize that the dust box is not appropriately accommodated, a situation in which the air conditioner is operated in a state where the dust box is not appropriately accommodated in the accommodating portion can be more reliably prevented.

### Advantageous Effects of Invention

With the present invention, assemblability can be improved by simplifying the structure, and the space can be saved.

In addition, reliability can be improved.

### Brief Description of Drawings

Fig. 1 is a perspective view showing an indoor unit of an air conditioner according to an embodiment of the present invention.
Fig. 2 is a perspective view showing a state where a dust box is removed in the indoor unit of Fig. 1.
Fig. 3 is a side view showing the indoor unit of Fig. 1.
Fig. 4 is a cross-sectional view taken along arrow IV-IV of Fig. 3.
Fig. 5 is a perspective view showing a lever mechanism provided at the indoor unit of an air conditioner according to the embodiment of the present invention.
Fig. 6 is a top view showing the lever mechanism of Fig. 5.
Fig. 7 is a bottom view showing the lever mechanism of Fig. 5.
Fig. 8 is a top view schematically showing the lever mechanism and a determination unit according to the embodiment of the present invention, and is a view showing a state where a lever presses a switch.
Fig. 9 is a top view schematically showing the lever mechanism and the determination unit according to the embodiment of the present invention, and is a view showing a state where the lever does not press the switch.
Fig. 10 is a top view schematically showing a dust box and a dust box accommodating portion according to the embodiment of the present invention.

### Description of Embodiments

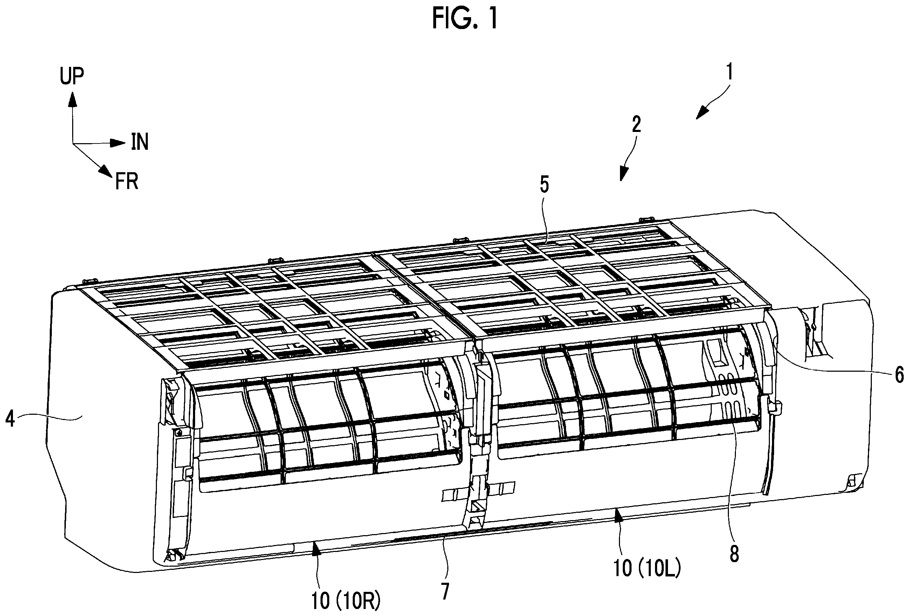

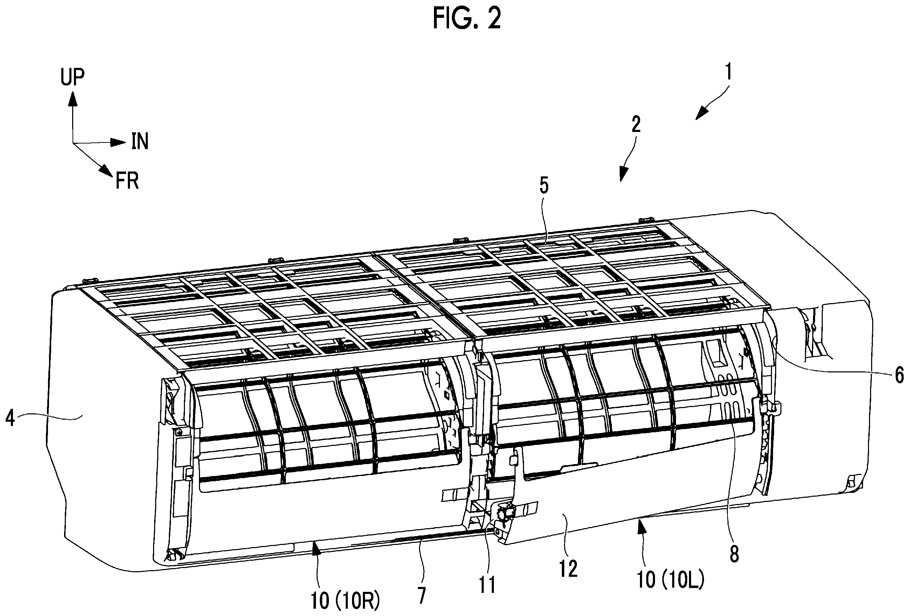

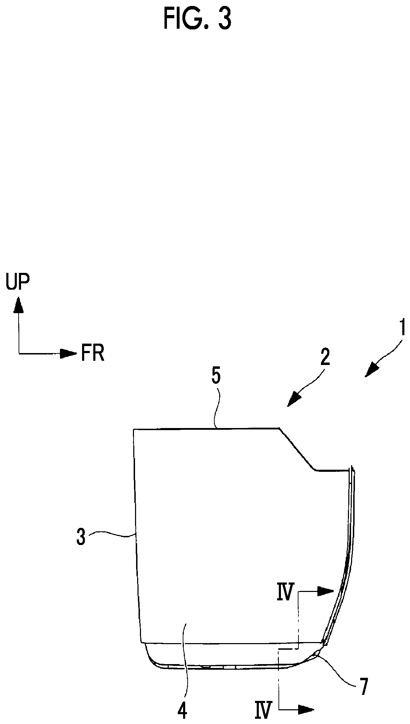

Hereinafter, an embodiment of an indoor unit of an air conditioner according to the present invention will be described with reference to Figs. 1 to 10. An indoor unit 1 of the present embodiment is a wall-mounted indoor unit. In the figures, FR means the front of the indoor unit, UP means an upper side of the indoor unit, and IN means a center direction of the indoor unit. In the following description, a right-left direction will also be referred to as a "width direction" in a state of facing the front of the indoor unit.

As shown in Figs. 1 to 4, the indoor unit 1 includes a casing 2 having a rectangular parallelepiped shape of which a longitudinal direction is the width direction. The casing 2 is configured by a base 3 configuring a back surface side of the casing 2, a front cover 4 covering a front surface side of the base 3, and a front panel (not shown) covering a front surface of the front cover 4. Figs. 1 to 4 are shown with the front panel omitted.

In the front cover 4, a suction grill 5 is formed in an upper surface, and a front surface opening 6 is formed in the front. In front of the front cover 4, the front panel is provided. The front panel is movable rotationally about an upper portion, which is a fulcrum. In addition, a blowing port 7 is formed in a lower front portion of the front cover 4.

Inside the casing 2, a cross flow fan (not shown) having an elongated cylindrical shape or a heat exchanger (not shown) in which a refrigerant flows is disposed. The cross flow fan is rotated by power from a driving source (not shown) and introduces outside air from the suction grill 5 and the front surface opening 6 into the casing 2. The heat exchanger has a plurality of tubes in which a refrigerant flows and a plurality of plate-shaped fins provided on outer peripheral surfaces of tubes and causes the outside air introduced inside the casing 2 and the refrigerant to exchange heat with each other. The outside air which has completed heat exchange in the heat exchanger is blown from the blowing port 7 to the outside of the casing 2.

In addition, inside the casing 2, a filter 8 that captures foreign substances such as dust is arranged along the front surface opening 6 and the suction grill 5. Specifically, the filter 8 is disposed between the front surface opening 6 and the suction grill 5, and the heat exchanger. That is, the outside air which has passed through the filter 8 is guided to the heat exchanger. One filter 8 is disposed on one side and one filter is disposed on the other side with a substantially central portion interposed therebetween in the width direction. That is, two filters 8 are provided, and the two filters 8 are arranged along the width direction.

In addition, inside the casing 2, a cleaning device (cleaning unit) (not shown) that automatically cleans the filter 8 is provided. The cleaning device moves the filter 8 along a predetermined path and removes foreign substances such as dust adhered to a surface of the filter 8 on the move with a brush. The foreign substances, such as removed dust, are discharged to a dust box 10.

In addition, the dust box 10 is provided inside the casing 2 and at a lower front portion of the casing 2. The dust box 10 is accommodated in a dust box accommodating portion 20 (accommodating portion) to be described later. Specifically, the dust box is accommodated in the dust box accommodating portion 20 so as to be inserted from the front toward the rear.

The two dust boxes 10 are arranged along the width direction (that is, a direction intersecting an accommodating direction) of the indoor unit 1. Specifically, a first dust box 10R disposed on the right (the left of the page in Fig. 1) in a state of facing the front of the indoor unit 1 and a second dust box 10L disposed on the left (the right of the page in Fig. 1) in the state of facing the front of the indoor unit 1 are provided. The first dust box 10R and the second dust box 10L are adjacent to each other.

The first dust box 10R and the second dust box 10L are mainly disposed at different positions, and have substantially the same structure. For this reason, in the following, only in a case where distinction is necessary, description will be made by individually referring to the first dust box 10R and the second dust box 10L, and in a case where the distinction is not necessary, description will be made by collectively referring to the dust box 10.

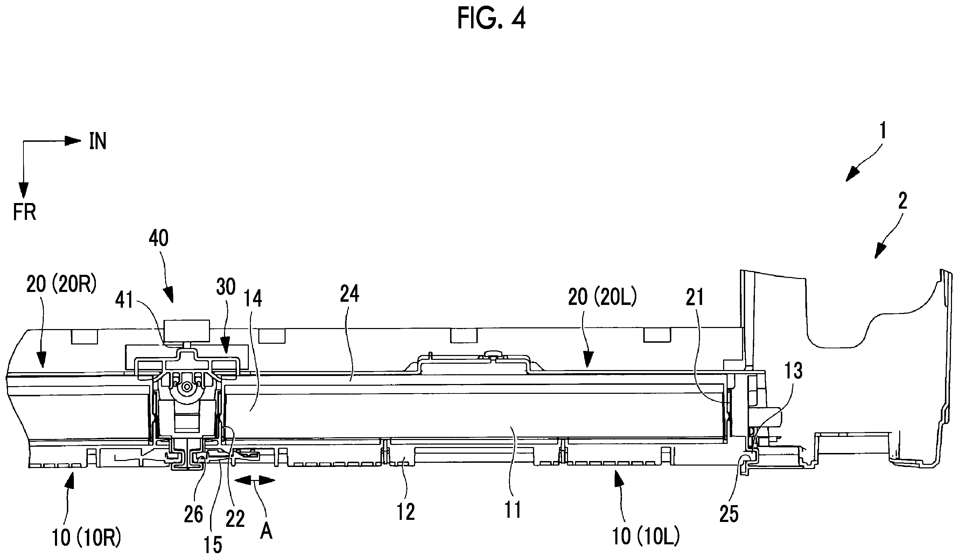

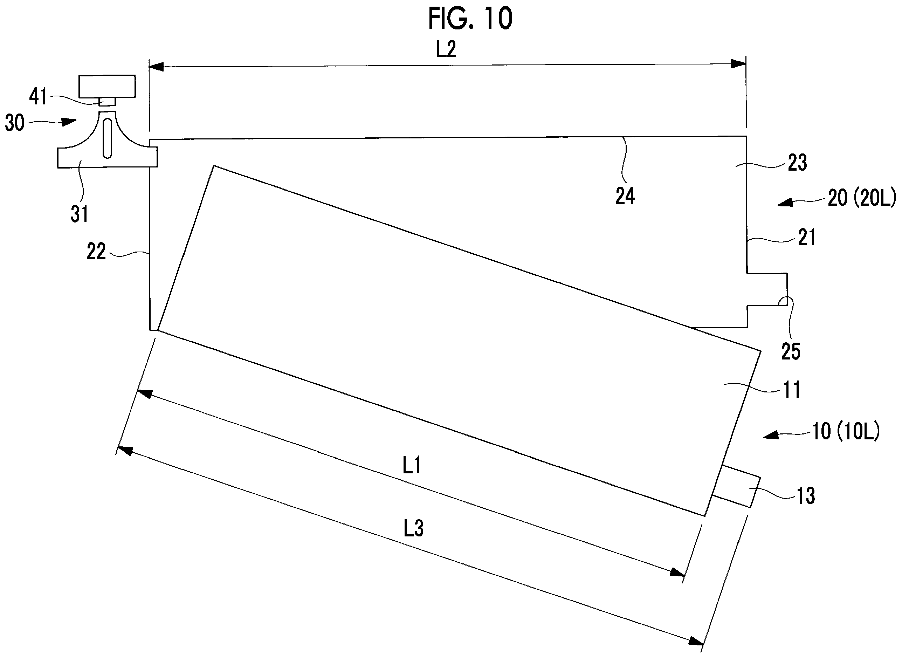

The dust box 10 has a tub-shaped storage portion 11 that stores foreign substances and a panel portion 12 that is attached to a front end portion of the storage portion 11. The panel portion 12 covers the front end portion of the storage portion 11 and a lower portion of the front surface opening 6 from the front. In addition, the dust box has a protrusion portion 13 protruding by a predetermined length from an outer side end portion of the storage portion 11 in the width direction (see Figs. 4 and 10). In addition, in the dust box 10, an inner side end portion of the storage portion 11 in the width direction comes into contact with a lever portion 31 (specifically, a first portion 34 of the lever portion 31) to be described later and becomes a pressing unit 14 that presses the lever portion 31 from the front to the rear (see Fig. 10). In addition, a clip portion 15 is provided at an inner side end portion of the panel portion 12. As shown by an arrow A of Fig. 4, the clip portion 15 is slidingly movable in the width direction.

In addition, the dust box accommodating portion 20 that accommodates the dust box 10 is provided inside the casing 2. The dust box accommodating portion 20 is provided at the lower front portion of the casing 2.

Two dust box accommodating portions 20 are arranged along the width direction (that is, the direction intersecting the accommodating direction). Specifically, a first dust box accommodating portion 20R disposed on the right (the left of the page in Fig. 1) in a state of facing the front of the indoor unit 1 and a second dust box accommodating portion 20L disposed on the left (the right of the page in Fig. 1) in the state of facing the front of the indoor unit 1 are provided. The first dust box accommodating portion 20R and the second dust box accommodating portion 20L are adjacent to each other. The first dust box accommodating portion 20R accommodates the first dust box 10R. The second dust box accommodating portion 20L accommodates the second dust box 10L.

The first dust box accommodating portion 20R and the second dust box accommodating portion 20L are mainly disposed at different positions, and have substantially the same structure. For this reason, in the following, only in a case where distinction is necessary, description will be made by individually referring to the first dust box accommodating portion 20R and the second dust box accommodating portion 20L, and in a case where the distinction is not necessary, description will be made by collectively referring to the dust box accommodating portion 20.

The dust box accommodating portion 20 forms an accommodation space that accommodates the dust box 10 therein. In addition, the dust box accommodating portion 20 has an outer side wall portion 21 that defines a side end on an outer side in the width direction, an inner side wall portion 22 that defines an end portion on an inner side (central side) in the width direction, a bottom surface portion 23 that defines a lower end, and a rear wall portion 24 that defines a rear end. A front end of the accommodation space is open, and the dust box 10 is accommodated from the front end. That is, the dust box 10 is accommodated in the dust box accommodating portion 20 while being moved from the front to the rear. The length of a recessed portion 25 in a front-rear direction is formed larger than the length of the protrusion portion 13 in the front-rear direction, and the protrusion portion 13 can be smoothly inserted into the recessed portion 25. In addition, the recessed portion 25 (see Figs. 4 and 10) into which the protrusion portion 13 is insertable is formed at a position corresponding to the protrusion portion 13 in the outer side wall portion 21. The recessed portion 25 is formed to be recessed from an inner peripheral surface of the outer side wall portion 21. In addition, an engaging portion 26 into which the clip portion 15 is insertable is formed at a position corresponding to the clip portion 15 in the inner side wall portion 22. The engaging portion 26 is formed to be recessed from an inner peripheral surface of the inner side wall portion 22.

A space (hereinafter, referred to as a "first space") formed inside the first dust box accommodating portion 20R and a space (hereinafter, referred to as a "second space") formed inside the second dust box accommodating portion 20L are not completely separated from each other by the inner side wall portion 22, and partially communicate with each other. The lever portion 31 to be described later is disposed in the communication portion. That is, the lever portion 31 is provided over both spaces including the first space and the second space.

As shown in Fig. 10, a length L1 of the dust box 10 excluding the protrusion portion 13 is smaller than a length L2 from the inner side wall portion 22 to the outer side wall portion 21 of the dust box accommodating portion 20. In addition, a length L3 from an inner side end portion of the dust box 10 to a tip of the protrusion portion 13 is larger than the length L2 from the inner side wall portion 22 to the outer side wall portion 21 of the dust box accommodating portion 20.

As shown in Fig. 4, in a state of being accommodated in the dust box accommodating portion 20, an outer side end portion of the dust box 10 is fixed as the protrusion portion 13 is inserted into the recessed portion 25. On the other hand, in the state of being accommodated in the dust box accommodating portion 20, an inner side end portion of the dust box 10 is fixed by the clip portion 15. Specifically, the clip portion 15 can protrude from the inner side end portion of the dust box 10 by being slidingly moved. Accordingly, the clip portion 15 engages with the engaging portion 26.

As described above, as the protrusion portion 13 and the recessed portion 25 engage with each other at the outer side end portion and the clip portion 15 and the engaging portion 26 engage with each other at the inner side end portion, relative movements between the dust box 10 and the dust box accommodating portion 20 in the front-rear direction and an up-down direction are restricted.

Next, details of a lever mechanism 30 and a determination unit 40 will be described with reference to Figs. 4 to 9.

First, an example of the lever mechanism 30 will be described with reference to Figs. 4 to 7.

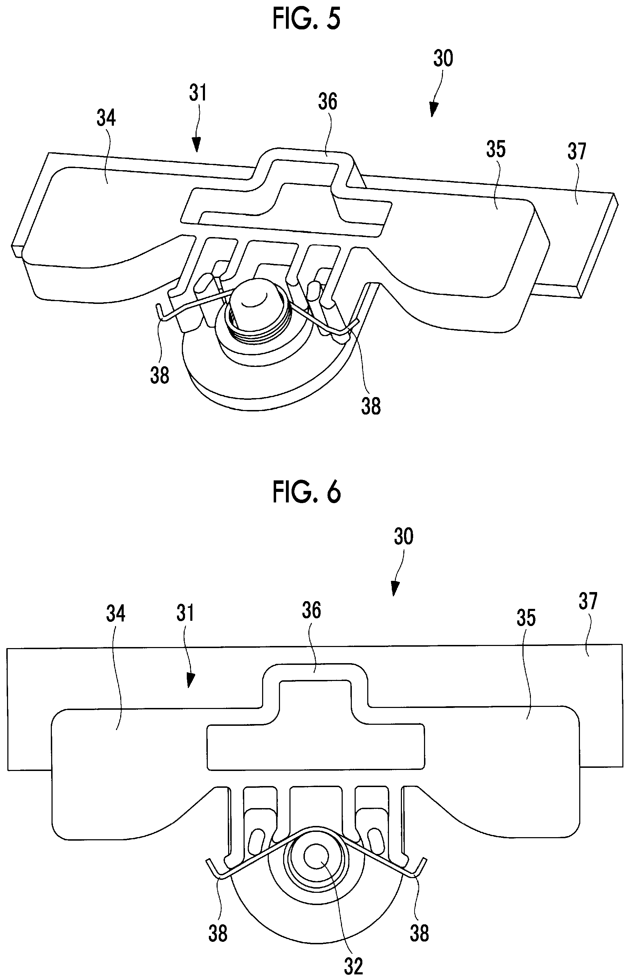

As shown in Fig. 4, the lever mechanism 30 is provided between the first dust box accommodating portion 20R and the second dust box accommodating portion 20L. As shown in Figs. 4 to 6, the lever mechanism 30 has the lever portion 31 that is pressed by the first dust box 10R and the second dust box 10L from the front and a base portion 37 that is fixed to the casing 2 and is provided below the lever portion 31. As shown in Fig. 6, a shaft portion 32 is fixed to substantially the center of the lever portion 31 in the width direction.

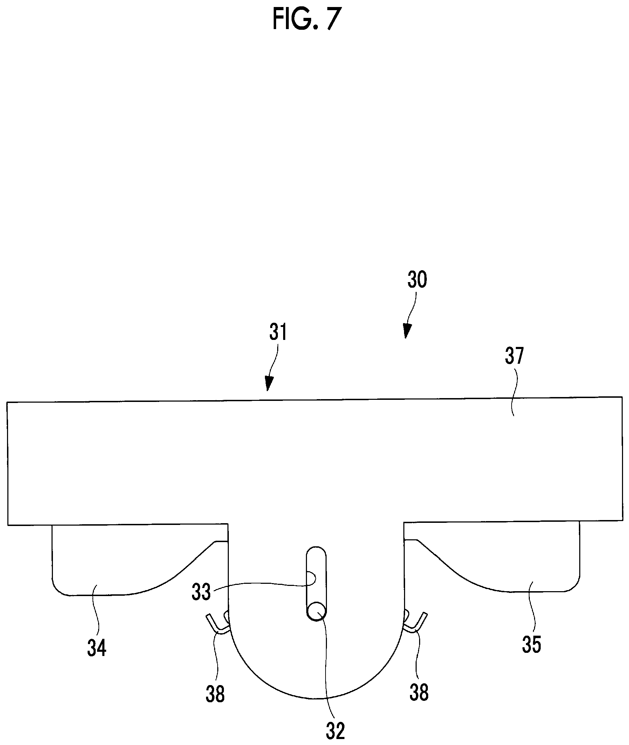

As shown in Fig. 7, a slit 33 is formed in a substantially central region of the base portion 37 in the width direction (right-left direction). The slit 33 is an opening penetrating in the up-down direction and is formed such that a longitudinal direction thereof is the front-rear direction. The length of the slit 33 in the width direction (a direction intersecting the longitudinal direction) is formed to be slightly larger than the outer diameter of the shaft portion 32 to be described later.

As shown in Figs. 4 to 7, the lever portion 31 has the shaft portion 32 that is provided at substantially the center in the width direction, the first portion 34 that is provided on a first dust box 10R side with the shaft portion 32 as reference, a second portion 35 that is provided on a second dust box 10L side with the shaft portion 32 as reference, and a pressing portion 36 that is provided at a rear end portion and presses a switch 41 to be described later. In addition, the lever portion 31 is provided with a spring 38.

The first portion 34 is formed to protrude from a central region of the lever portion 31 to the first dust box 10R side. The second portion 35 is formed to protrude from the central region of the lever portion 31 to the second dust box 10L side. The pressing portion 36 is disposed at the same position as the shaft portion 32 in the width direction. That is, the pressing portion 36 is disposed directly behind the shaft portion 32.

As shown in Fig. 7, the shaft portion 32 is a cylindrical member that extends downward from a lower surface of the lever portion 31 and is inserted through the slit 33 to be described later. As described above, as the shaft portion 32 is inserted through the slit 33, the lever portion 31 engages with the shaft portion 32 so as to be rotatable and to be slidable in the front-rear direction.

Although an example in which the shaft portion 32 is provided at the lever portion 31 and the slit 33 is formed in the base portion 37 fixed to the casing 2 has been described, the present invention is not limited thereto. For example, the slit 33 may be formed in the lever portion 31, and the shaft portion 32 may be provided so as to be fixed to the casing 2. That is, it is sufficient to adopt a configuration where a member provided with the shaft portion 32 and a member where the slit 33 is formed are relatively movable and the shaft portion 32 is inserted through the slit 33. In other words, it is sufficient to adopt a configuration where the lever portion 31 is rotatable and is slidable in the front-rear direction.

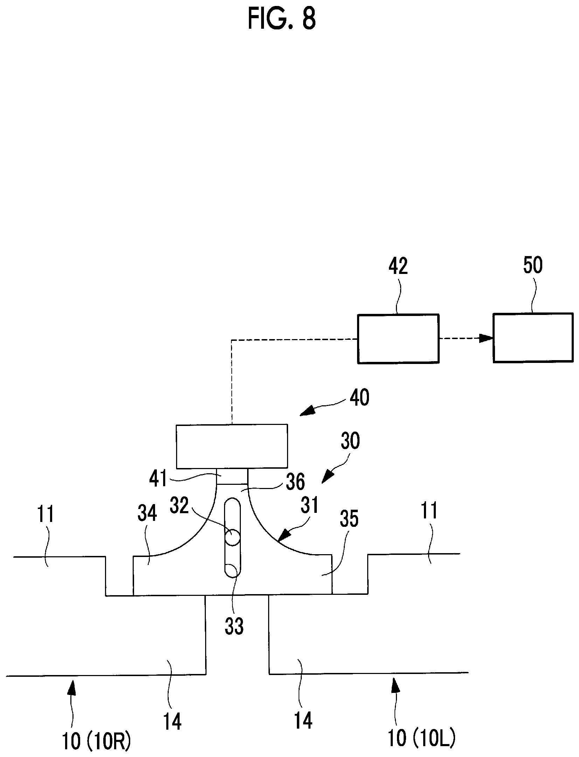

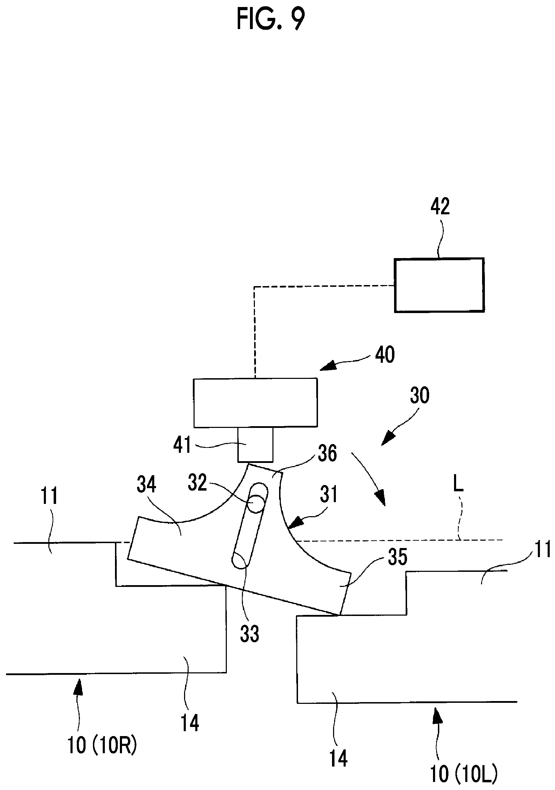

In the following, action of the lever portion 31 and the determination unit 40 in a case where the slit 33 is formed in the lever portion 31 and the shaft portion 32 is provided so as to be fixed to the casing 2 will be described with reference to Figs. 8 and 9. Figs. 8 and 9 schematically show the lever portion 31 and the determination unit 40.

Also in an example in which the shaft portion 32 is provided at the lever portion 31 and the slit 33 is formed in the base portion 37 so as to be fixed to the casing 2 as shown in Figs. 5 to 7, the lever portion 31 acts the same.

As shown in Figs. 8 and 9, the lever mechanism 30 has the lever portion 31 that is pressed by the first dust box 10R and the second dust box 10L from the front and the shaft portion 32 that is fixed to the casing 2 and extends in the up-down direction.

The lever portion 31 has the slit 33, which extends in the front-rear direction and through which the shaft portion 32 is inserted, the first portion 34 which is provided on the first dust box 10R side with the slit 33 as reference, the second portion 35 which is provided on the second dust box 10L side with the slit 33 as reference, and the pressing portion 36 which is provided at the rear end portion and presses the switch 41 to be described later.

The slit 33 is an opening penetrating in the up-down direction and is formed in the substantially central region of the lever portion 31 in the width direction. In addition, the length of the slit 33 in the width direction (a direction intersecting an extending direction) is formed to be slightly larger than the outer diameter of the shaft portion 32. In addition, the slit 33 is formed over substantially the entire area of the lever portion 31 in the front-rear direction.

The first portion 34 is formed to protrude from the central region of the lever portion 31 to the first dust box 10R side. The first portion 34 abuts against the first dust box 10R and is pressed by the first dust box 10R from the front. The second portion 35 is formed to protrude from the central region of the lever portion 31 to the second dust box 10L side. The second portion 35 abuts against the second dust box 10L and is pressed by the second dust box 10L from the front. The pressing portion 36 is disposed at the same position as the slit 33 in the width direction. That is, the pressing portion 36 is disposed directly behind the slit 33.

The shaft portion 32 is a cylindrical member extending in the up-down direction and is inserted through the slit 33.

As described above, as the shaft portion 32 is inserted through the slit 33, the lever portion 31 engages with the shaft portion 32 so as to be rotatable and to be slidable in the front-rear direction.

In addition, the indoor unit 1 includes the determination unit 40 that determines whether or not both of the first dust box 10R and the second dust box 10L are appropriately accommodated in the corresponding dust box accommodating portions 20.

The determination unit 40 includes one switch 41 pressed by the lever portion 31 and a control device 42 that determines, based on a pressed state of the switch 41, whether or not both of the first dust box 10R and the second dust box 10L are appropriately accommodated in the corresponding dust box accommodating portions 20.

The switch 41 is disposed at the rear of the lever portion 31 and can be pressed from the front. The switch 41 is configured such that the pressed state can be maintained in a case where the positions of the first dust box 10R and the second dust box 10L in the front-rear direction match each other and the pressed state cannot be maintained in a case where the positions in the front-rear direction do not match each other. The switch 41 transmits the pressed state to the control device 42. As pressed by the first dust box 10R and the second dust box 10L, the switch 41 is pressed by the lever portion 31 moving to the rear.

In a case where the pressed state of the switch 41 is maintained for a predetermined time, the control device 42 determines that both of the first dust box 10R and the second dust box 10L are appropriately accommodated in the corresponding dust box accommodating portions 20.

In a case where the switch 41 is not pressed, the control device 42 determines that the first dust box 10R and/or the second dust box 10L is not appropriately accommodated in the corresponding dust box accommodating portion 20. In addition, even when the switch 41 is pressed, the control device 42 determines that the first dust box 10R and/or the second dust box 10L is not appropriately accommodated in the corresponding dust box accommodating portion 20 in a case where the pressed state has not been maintained for a predetermined time.

The appropriately accommodated state is, for example, a state where the dust box 10 is accommodated at a position that does not interfere with the filter 8 moved by the cleaning device.

In addition, in a case where it is determined that the first dust box 10R and/or the second dust box 10L is not appropriately accommodated in the corresponding dust box accommodating portion 20, the control device 42 issues a notification with the notification unit 50. The notification unit 50 is, for example, a buzzer or a lamp provided at a position visible from the outside.

The control device 42 is, for example, configured by a central processing unit (CPU), a random access memory (RAM), a read only memory (ROM), and a computer readable storage medium. For example, a series of processes for realizing various types of functions are stored in the storage medium in a form of a program, and the program is read by the CPU with the RAM to execute an information processing and computing process, thereby realizing the various types of functions. The program may be applied in a form of being installed in advance in the ROM or other storage media, a form of being provided in a state of being stored in the computer readable storage medium, and a form of being distributed via communication means in a wired or wireless manner. The computer readable storage medium corresponds to a magnetic disk, a magneto-optical disk, a CD-ROM, a DVD-ROM, and a semiconductor memory.

Next, a method of accommodating the dust box 10 in the dust box accommodating portion 20 in the indoor unit 1 according to the present embodiment will be described.

First, any one of the first dust box 10R or the second dust box 10L is accommodated in the corresponding dust box accommodating portion 20. In the following description, an example of first accommodating the first dust box 10R will be described, but any dust box 10 may be accommodated first.

First, the first dust box 10R is accommodated from the outer side thereof in the first dust box accommodating portion 20R, and the protrusion portion 13 is inserted into the recessed portion 25. Next, an inner side of the first dust box 10R is accommodated in the first dust box accommodating portion 20R. After accommodating the entire first dust box 10R in the first dust box accommodating portion 20R, the clip portion 15 is slidingly moved, and the clip portion 15 and the engaging portion 26 are engaged with each other. In this manner, the accommodation of the first dust box 10R is completed. When the accommodation of the first dust box 10R is completed, next, the second dust box 10L is accommodated in the second dust box accommodating portion 20L. Since a method of accommodating the second dust box 10L is the same as the first dust box 10R, description thereof will be omitted.

In a case where the notification unit 50 issues a notification after the accommodation of the first dust box 10R and the second dust box 10L is completed, the accommodation of the dust box 10 is completed since both of the first dust box 10R and the second dust box 10L are appropriately accommodated in the corresponding dust box accommodating portion 20.

In a case where the notification unit 50 issues a notification after the accommodation of the first dust box 10R and the second dust box 10L is completed, a user can recognize that the first dust box 10R and/or the second dust box 10L is not appropriately accommodated in the corresponding dust box accommodating portion 20. In this case, the accommodation of the first dust box 10R and/or the second dust box 10L is performed again.

In the indoor unit 1 according to the present embodiment, the dust box 10 is accommodated in the dust box accommodating portion 20 in this manner.

In the present embodiment, the following operational effects are achieved.

In the configuration, the determination unit 40 determines whether or not both of the first dust box 10R and the second dust box 10L are appropriately accommodated in the corresponding dust box accommodating portions 20. Accordingly, in a case where the first dust box 10R and/or the second dust box 10L is not appropriately accommodated in the corresponding dust box accommodating portion 20, this situation can be learned. Therefore, a situation in which the air conditioner is operated in a state where the dust box 10 is not appropriately accommodated in the dust box accommodating portion 20 can be prevented. Accordingly, the occurrence of a defect caused by operating the air conditioner in a state where the dust box 10 is not appropriately accommodated in the accommodating portion can be prevented. The defect is, for example, a situation in which the filter 8 and the dust box 10 interfere with each other and the filter 8 becomes damaged when cleaning the filter 8 while moving the cleaning device.

In the present embodiment, for example, as shown in Fig. 9, in a case where the second dust box 10L is not positioned at an appropriate position (a broken line L of Fig. 9) and the first dust box 10R is positioned in front of the second dust box 10L (that is, a case where the position of the first dust box 10R in the front-rear direction and the position of the second dust box 10L in the front-rear direction do not match each other), only the first dust box 10R presses the lever portion 31. The first portion 34 of the lever portion 31, which is pressed by the first dust box 10R, is positioned on the first dust box 10R side from the shaft portion 32, out of the lever rotatably provided. For this reason, when only the first dust box 10R presses the lever portion 31, the lever rotates about the shaft portion 32. In addition, similarly, for example, also in a case where the second dust box 10L is positioned in front of the first dust box 10R in a predetermined direction, only the second dust box 10L presses the lever portion 31, and the lever rotates about the shaft portion 32. As described above, in a case where the position of the first dust box 10R in the predetermined direction and the position of the second dust box 10L in the predetermined direction do not match each other and only one dust box 10 presses the lever, the lever does not move in the predetermined direction since the lever rotates.

On the contrary, as shown in Fig. 8, in a case where the position of the first dust box 10R in the front-rear direction and the position of the second dust box 10L in the front-rear direction match each other, the lever portion 31 is pressed by both of the first dust box 10R and the second dust box 10L. In this case, since the rotation of the lever is restricted by the first dust box 10R and the second dust box 10L, the rotation of the lever is prevented. Therefore, the lever pressed by the first dust box 10R and the second dust box 10L moves to the rear, and the switch 41 can be pressed. In addition, the pressed state of the switch 41 can be maintained.

As described above, in the present embodiment, the positions of the first dust box 10R and the second dust box 10L, which are adjacent to each other, in the predetermined direction match each other, the pressed state of the switch 41 is maintained. In addition, in a case where the positions in predetermined direction do not match each other, the pressed state of the switch 41 is not maintained. Therefore, whether or not both of the first dust box 10R and the second dust box 10L are appropriately accommodated in the corresponding dust box accommodating portions 20 can be determined by only one switch 41.

Accordingly, compared to a case where the switch 41 corresponding to each of the first dust box 10R and the second dust box 10L is provided, layout of wiring connected to the switch 41 can be simplified. Accordingly, assemblability can be improved, and the space can be saved. In addition, since the number of components can be reduced, reliability can be improved. In addition, maintainability can be improved, and manufacturing costs can be reduced.

In the present embodiment, the length L3 from the inner side end portion of the dust box 10 to the tip of the protrusion portion 13 is larger than the length L2 from the inner side wall portion 22 to the outer side wall portion 21 of the dust box accommodating portion 20. Accordingly, as shown in Fig. 10, in a case of accommodating the dust box 10 in the dust box accommodating portion 20 in a state where the protrusion portion 13 is not inserted into the recessed portion 25, the protrusion portion 13 and the outer side wall portion 21 interfere with each other. For this reason, in a state where the protrusion portion 13 of the dust box 10 is not inserted into the recessed portion 25, the dust box 10 cannot be accommodated in the dust box accommodating portion 20. In order to accommodate the dust box 10 in the dust box accommodating portion 20, first, it is necessary to insert the protrusion portion 13 into the recessed portion 25. That is, before accommodating the pressing unit 14 (inner side end portion) pressing the switch 41, first, it is necessary to accommodate the outer side end portion where the protrusion portion 13 is provided in the accommodating portion.

In a case where the pressing unit 14 is accommodated in the dust box accommodating portion 20, there is a possibility that the switch 41 is pressed by the pressing unit 14 even when the outer side end portion is not accommodated in the dust box accommodating portion 20. In the present embodiment, since it is necessary to accommodate the outer side end portion first in the dust box accommodating portion 20 as described above, a state where the outer side end portion is not accommodated in the dust box accommodating portion 20 can be prevented regardless of the fact that the pressing unit 14 is accommodated in the dust box accommodating portion 20. Accordingly, a situation in which the air conditioner is operated in a state where the dust box 10 is not appropriately accommodated in the dust box accommodating portion 20 can be more reliably prevented.

The length L1 excluding the protrusion portion 13 of the dust box 10 according to the present embodiment is a length at which the pressing unit 14 of the dust box 10 does not press the switch 41 via the lever or a length at which the pressed state is not maintained in a state where the protrusion portion 13 and the outer side wall portion 21 interfere with each other. Therefore, in a state where the protrusion portion 13 and the outer side wall portion 21 interfere with each other, the determination unit 40 can reliably determine that the first dust box 10R and/or the second dust box 10L is not appropriately accommodated in the corresponding dust box accommodating portion 20.

In the present embodiment, in a case where the determination unit 40 determines that any one of the dust boxes 10 is not appropriately accommodated in the accommodating portion, the notification unit 50 issues a notification. Accordingly, the user can learn that the dust box 10 is not appropriately accommodated in the accommodating portion. Therefore, since the user can recognize that the dust box is not appropriately accommodated, a situation in which the air conditioner is operated in a state where the dust box 10 is not appropriately accommodated in the accommodating portion can be more reliably prevented.

By preventing an accommodation mistake of the dust box 10 made by the user, which is one cause of damage to the filter 8, as described above, when the filter 8 is actually damaged, a cause of the damage to the filter 8 can be accurately learned.

The present invention is not limited to each of the embodiments, and can be modified as appropriate without departing from the scope as defined in the appended claims.

For example, in a case where it is determined that the first dust box 10R and/or the second dust box 10L is not appropriately accommodated in the corresponding dust box accommodating portion 20, the control device 42 may not perform a cleaning operation.

In addition, two or more dust boxes 10 may be provided. Even in such a case, by applying a configuration where the lever mechanism 30 and the determination unit 40 of the present embodiment is provided between the dust boxes 10 adjacent to each other, the number of switches 41 can be made smaller than the number of dust boxes 10. Therefore, the layout of wiring connected to the switch 41 can be simplified.

### Reference Signs List

1: indoor unit
2: casing
3: base
4: front cover
5: suction grill
6: front surface opening
7: blowing port
8: filter
10: dust box
10L: second dust box
10R: first dust box
11: storage portion
12: panel portion
13: protrusion portion
14: pressing unit
15: clip portion
20: dust box accommodating portion
20L: second dust box accommodating portion
20R: first dust box accommodating portion
21: outer side wall portion
22: inner side wall portion
23: bottom surface portion
24: rear wall portion
25: recessed portion
26: engaging portion
30: lever mechanism
31: lever portion
32: shaft portion
33: slit
34: first portion
35: second portion
36: pressing portion
40: determination unit
41: switch
42: control device
50: notification unit

## Claims

1. An indoor unit (1) of an air conditioner comprising:
a filter (8) configured to capture a foreign substance;
a cleaning unit configured to remove the foreign substance adhered to the filter from the filter;
a plurality of dust boxes (10R,10L) configured to store the foreign substance removed by the cleaning unit;
an accommodating portion (20) that accommodates the plurality of dust boxes and detachably holds the plurality of dust boxes;
**characterized in that** the indoor unit further comprises:
a determination unit (40) configured to determine whether or not the plurality of dust boxes are accommodated in the accommodating portion;
a lever portion (31) that is pressed by the dust boxes adjacent thereto; and
a shaft portion (32) that engages with the lever portion (31);
wherein the accommodating portion (20) is capable of accommodating the dust boxes from a predetermined direction;
the lever portion (31) is engaged with the shaft portion (32) so as to be rotatable about the shaft portion (32) and to be slidable in the predetermined direction,
the lever portion (31) moves to the predetermined direction with rotation of the lever portion (31) restricted in a case where positions of the dust boxes (10R,10L), which are adjacent to each other, in the predetermined direction match each other, while the lever portion (31) rotates in a case where the positions of the dust boxes (10R,10L) in the predetermined direction do not match each other,
the determination unit (40) has a switch (41) of which a pressed state is maintained by the lever portion (31) moving in the predetermined direction with the rotation restricted in a case where positions of the dust boxes (10R,10L), which are adjacent to each other, in the predetermined direction match each other, while the pressed state is not maintained by the lever portion (31) in a case where the positions of the dust boxes (10R,10L) in the predetermined direction do not match each other, and
the determination unit (40) is configured to determine that the dust boxes adjacent to each other are accommodated in the accommodating portion in a case where the pressed state of the switch (41) is maintained,
wherein the lever portion (31) has a slit (33) that extends in the predetermined direction and through which the shaft portion (32) is inserted, a first portion (34) that is provided on a side of a first dust box (10R), which is one of the dust boxes adjacent to each other, with the slit (33) as reference and is pressed by the first dust box in the predetermined direction, and a second portion (35) that is provided on a side of a second dust box (10L), which is one of the dust boxes adjacent to each other, with the slit (33) as reference and is pressed by the second dust box in the predetermined direction,
and
the switch (41) is pressed by the lever portion (31) moving in the predetermined direction.

2. The indoor unit (1) of an air conditioner according to claim 1,
wherein the plurality of dust boxes (10R,10L) are arranged in an intersecting direction that intersects the predetermined direction,
the dust box has a pressing unit (14) that is provided at one end portion in the intersecting direction and indirectly or directly presses the switch (41) and a protrusion portion (13) that protrudes, in the intersecting direction, from the other end portion in the intersecting direction,
the accommodating portion (20) has a recessed portion (25) that is recessed from the other end side wall portion defining the other end in the intersecting direction and into which the protrusion portion (13) is insertable, and
a length from the one end portion of the dust box to a tip of the protrusion portion (13) in the intersecting direction is larger than a length from one end portion of the accommodating portion (20) to the other end side wall portion in the intersecting direction.

3. The indoor unit (1) of an air conditioner according to claim 1 or 2, further comprising:
a notification unit (50) configured to issue a notification in a case where the determination unit (40) determines that any one of the dust boxes is not appropriately accommodated in the accommodating portion (20).

## Patentansprüche

1. Innenraumeinheit (1) einer Klimaanlage, umfassend:
einen Filter (8), der konfiguriert ist, um einen Fremdkörper aufzufangen;
eine Reinigungseinheit, die konfiguriert ist, um den an dem Filter anhaftenden Fremdkörper von dem Filter zu entfernen;
eine Vielzahl von Staubkästen (10R, 10L), die konfiguriert sind, um den von der Reinigungseinheit entfernte Fremdkörper zu speichern;
einen Aufnahmeabschnitt (20), der die Vielzahl von Staubkästen aufnimmt und die Vielzahl von Staubkästen abnehmbar hält;
**dadurch gekennzeichnet, dass** die Innenraumeinheit ferner Folgendes umfasst:
eine Bestimmungseinheit (40), die konfiguriert ist, um zu bestimmen, ob die Vielzahl von Staubkästen in dem Aufnahmeabschnitt aufgenommen ist;
einen Hebelabschnitt (31), der von den daran angrenzenden Staubkästen gedrückt wird; und
einen Schaftabschnitt (32), der mit dem Hebelabschnitt (31) eingreift;
wobei der Aufnahmeabschnitt (20) in der Lage ist, die Staubkästen aus einer vorbestimmten Richtung aufzunehmen;
der Hebelabschnitt (31) mit dem Schaftabschnitt (32) in Eingriff ist, um um den Schaftabschnitt (32) drehbar und in der vorbestimmten Richtung verschiebbar zu sein,
der Hebelabschnitt (31) sich in die vorbestimmte Richtung bewegt, wobei eine Drehung des Hebelabschnitts (31) in einem Fall beschränkt ist, in dem Positionen der Staubkästen (10R, 10L), die aneinander angrenzend sind, in der vorbestimmten Richtung miteinander übereinstimmen, während der Hebelabschnitt (31) in einem Fall dreht, in dem die Positionen der Staubkästen (10R, 10L) in der vorbestimmten Richtung nicht miteinander übereinstimmen,
die Bestimmungseinheit (40) einen Schalter (41) aufweist, wovon ein gedrückter Zustand durch den Hebelabschnitt (31) beibehalten wird, der sich in der vorbestimmten Richtung bewegt, wobei eine Drehung in einem Fall beschränkt ist, in dem Positionen der Staubkästen (10R, 10L), die aneinander angrenzend sind, in der vorbestimmten Richtung miteinander übereinstimmen, während der gedrückte Zustand durch den Hebelabschnitt (31) in einem Fall nicht beibehalten wird, in dem die Positionen der Staubkästen (10R, 10L) in der vorbestimmten Richtung nicht miteinander übereinstimmen, und
die Bestimmungseinheit (40) konfiguriert ist, um zu bestimmen, dass die aneinander angrenzenden Staubkästen in dem Aufnahmeabschnitt aufgenommen sind, wenn der gedrückte Zustand des Schalters (41) beibehalten wird,
wobei der Hebelabschnitt (31) einen Schlitz (33), der sich in der vorbestimmten Richtung erstreckt und durch den der Schaftabschnitt (32) eingeführt ist, einen ersten Abschnitt (34), der auf einer Seite eines ersten Staubkastens (10R) bereitgestellt ist, der einer der Staubkästen ist, die aneinander angrenzend sind, mit dem Schlitz (33) als Bezug bereitgestellt ist und von dem ersten Staubkasten in die vorbestimmte Richtung gedrückt wird, und einen zweiten Abschnitt (35), der auf einer Seite eines zweiten Staubkastens (10L), der einer der Staubkästen ist, die aneinander angrenzend sind, mit dem Schlitz (33) als Bezug bereitgestellt ist und von dem zweiten Staubkasten in die vorbestimmte Richtung gedrückt wird, aufweist, und
der Schalter (41) durch den Hebelabschnitt (31) gedrückt wird, der sich in die vorbestimmte Richtung bewegt.

2. Innenraumeinheit (1) einer Klimaanlage nach Anspruch 1,
wobei die Vielzahl von Staubkästen (10R, 10L) in einer sich kreuzenden Richtung angeordnet sind, die die vorbestimmte Richtung kreuzt,
der Staubkasten eine Druckeinheit (14), die an einem Endabschnitt in der kreuzenden Richtung bereitgestellt ist und indirekt oder direkt den Schalter (41) drückt, und einen Vorsprungsabschnitt (13), der in der kreuzenden Richtung von dem anderen Endabschnitt in der kreuzenden Richtung hervorsteht, aufweist,
der Aufnahmeabschnitt (20) einen ausgesparten Abschnitt (25) aufweist, der von dem anderen Endseitenwandabschnitt, der das andere Ende in der kreuzenden Richtung definiert, ausgespart ist, und in den der Vorsprungsabschnitt (13) einführbar ist, und
eine Länge von dem einen Endabschnitt des Staubkastens zu einer Spitze des Vorsprungsabschnitts (13) in der kreuzenden Richtung größer ist als eine Länge von einem Endabschnitt des Aufnahmeabschnitts (20) zu dem anderen Endseitenwandabschnitt in der kreuzenden Richtung.

3. Innenraumeinheit (1) einer Klimaanlage nach Anspruch 1 oder 2, ferner umfassend:
eine Benachrichtigungseinheit (50), die konfiguriert ist, um eine Benachrichtigung auszugeben, wenn die Bestimmungseinheit (40) bestimmt, dass einer der Staubkästen nicht auf geeignete Weise in dem Aufnahmeabschnitt (20) aufgenommen ist.

## Revendications

1. Unité intérieure (1) d'un climatiseur comprenant :
un filtre (8) configuré pour capturer une substance étrangère ;
une unité de nettoyage configurée pour retirer la substance étrangère fixée au filtre, du filtre ;
une pluralité de boîtes à poussière (10R, 10L) configurées pour stocker la substance étrangère retirée par l'unité de nettoyage ;
une partie de logement (20) qui loge la pluralité de boîtes à poussière et maintient, de manière détachable, la pluralité de boîtes à poussière ;
**caractérisée en ce que** l'unité intérieure comprend en outre :
une unité de détermination (40) configurée pour déterminer si la pluralité de boîtes à poussière est logée dans la partie de logement ou pas ;
une partie de levier (31) qui est comprimée par les boîtes à poussière adjacentes à cette dernière ; et
une partie d'arbre (32) qui se met en prise avec la partie de levier (31) ;
dans laquelle la partie de logement (20) est capable de loger les boîtes à poussière à partir d'une direction prédéterminée ;
la partie de levier (31) est mise en prise avec la partie d'arbre (32) afin de pouvoir tourner autour de la partie d'arbre (32) et de pouvoir coulisser dans la direction prédéterminée,
la partie de levier (31) se déplace dans la direction prédéterminée avec la rotation de la partie de levier (31) limitée dans un cas dans lequel les positions des boîtes à poussière (10R, 10L), qui sont adjacentes entre elles, dans la direction prédéterminée, correspondent les unes aux autres, alors que la partie de levier (31) tourne dans un cas dans lequel les positions des boîtes à poussière (10R, 10L), dans la direction prédéterminée, ne correspondent pas les unes aux autres,
l'unité de détermination (40) a un commutateur (41) dont un état enfoncé est maintenu par la partie de levier (31) se déplaçant dans la direction prédéterminée avec la rotation limitée dans un cas dans lequel les positions des boîtes à poussière (10R, 10L), qui sont adjacentes entre elles, dans la direction prédéterminée, correspondent les unes aux autres, alors que l'état enfoncé n'est pas maintenu par la partie de levier (31) dans un cas dans lequel les positions des boîtes à poussière (10R, 10L), dans la direction prédéterminée, ne correspondent pas les unes aux autres, et
l'unité de détermination (40) est configurée pour déterminer que les boîtes à poussière adjacentes les unes aux autres sont logées dans la partie de logement dans un cas dans lequel l'état enfoncé du commutateur (41) est maintenu,
dans laquelle la partie de levier (31) a une fente (33) qui s'étend dans la direction prédéterminée et à travers laquelle la partie d'arbre (32) est insérée, une première partie (34) qui est prévue sur un côté d'une première boîte à poussière (10R), qui est l'une des boîtes à poussière adjacentes entre elles, avec la fente (33) en tant que référence et est comprimée par la première boîte à poussière dans la direction prédéterminée, et une deuxième partie (35) qui est prévue sur un côté d'une deuxième boîte à poussière (10L), qui est l'une des boîtes à poussière adjacentes entre elles, avec la fente (33) en tant que référence et est comprimée par la deuxième boîte à poussière dans la direction prédéterminée,
et
le commutateur (41) est enfoncé par la partie de levier (31) qui se déplace dans la direction prédéterminée.

2. Unité intérieure (1) d'un climatiseur selon la revendication 1,
dans laquelle la pluralité de boîtes à poussière (10R, 10L) sont agencées dans une direction d'intersection qui coupe la direction prédéterminée,
la boîte à poussière a une unité d'enfoncement (14) qui est prévue au niveau d'une partie d'extrémité dans la direction d'intersection et enfonce indirectement ou directement le commutateur (41) et une partie de saillie (13) qui fait saillie, dans la direction d'intersection, à partir de l'autre partie d'extrémité dans la direction d'intersection,
la partie de logement (20) a une partie en retrait (25) qui est en retrait à partir de l'autre partie de paroi latérale d'extrémité définissant l'autre extrémité dans la direction d'intersection et dans laquelle la partie de saillie (13) peut être insérée, et
une longueur allant de la une partie d'extrémité de la boîte à poussière jusqu'à une pointe de la partie de saillie (13) dans la direction d'intersection est supérieure à une longueur allant d'une partie d'extrémité de la partie de logement (20) jusqu'à l'autre partie de paroi latérale d'extrémité dans la direction d'intersection.

3. Unité intérieure (1) d'un climatiseur selon la revendication 1 ou 2, comprenant en outre :
une unité de notification (50) configurée pour émettre une notification dans un cas dans lequel l'unité de détermination (40) détermine que l'une quelconque des boîtes à poussière n'est pas logée, de manière appropriée, dans la partie de logement (20).
